# EUROPEAN PATENT APPLICATION

(11) **EP 4 265 778 A1**
(43) Date of publication of application: **25.10.2023**
(21) Application number: 21906897.0
(22) Date of filing: 18.11.2021
(51) Int. Cl.: C22C 38/34, C22C 38/24, C22C 38/22, C21D 9/52, C21D 8/06, B21F 3/02, B21F 35/00, F16F 1/04

(54) **WIRE ROD AND STEEL WIRE FOR SPRING, SPRING, HAVING IMPROVED FATIGUE RESISTANCE AND NITRIFICATION PROPERTIES, AND METHODS FOR MANUFACTURING SAME**

(30) Priority: 17.12.2020 KR 20200177749
(71) Applicant: POSCO Co., Ltd, Pohang-si, Gyeongsangbuk-do 37859 (KR)
(72) Inventor: LEE, Junmo, Pohang-si, Gyeongsangbuk-do 37836 (KR); CHOI, Seok-hwan, Pohang-si, Gyeongsangbuk-do 37904 (KR); CHOI, Myungsoo, Pohang-si, Gyeongsangbuk-do 37669 (KR)
(74) Representative: Nederlandsch Octrooibureau
(86) International application number: PCT/KR2021/016990
(87) International publication number: WO 2022/131592

(57) **Abstract**

Disclosed are a wire rod and a steel wire for a spring, a spring with improved fatigue resistance and nitriding property, and methods for manufacturing same. The wire rod for a spring with improved fatigue resistance and nitriding property according to the present disclosure contains, by wt%, 0.6-0.7% of C, 2.0-2.5% of Si, 0.2-0.5% of Mn, 0.9-1.6% of Cr, 0.015% of less of P, 0.01% of less of S, 0.01% of less of Al, 0.007% of less of N, 0.1-0.25% of Mo, 0.1-0.25% of V, and Fe and inevitable impurities as the balance, wherein Cr + Mn is 1.8% or less, Mo/V is 1.5 or less, and the microstructure includes 60% or more of a pearlite structure in the C section.

## Description

### [Technical Field]

The present disclosure relates to a wire rod and a steel wire for a spring, a spring with improved fatigue resistance and nitriding property, and methods for manufacturing same. More specifically, it relates to a wire rod, a steel wire and a spring with improved fatigue resistance and nitriding property, as a spring steel for a 2,200 MPa-grade ultrahigh-strength transmission that can be easily nitrified even at high temperature, and methods for manufacturing same.

### [Background Art]

With the continued requirement of the weight reduction of automobile parts for weight reduction of vehicles, high strength is also required for a spring used for an automobile transmission. However, the decreased wire diameter of the high-strength spring material results in increased sensitivity to inclusions and, thus, lowers fatigue limit. In order to solve this problem, spring manufacturers increase the fatigue limit of spring materials by maintaining strength and improving surface hardness through nitriding.

Nitriding is performed at 500 °C or higher, in general. But, for spring steel, treatment is performed at 420-450 °C to prevent deterioration of strength, and heat treatment is performed for 10 hours or longer to ensure a sufficient nitrogen penetration depth. Since the tempering heat treatment temperature of spring steel is 450 °C or lower in general, the strength of most spring steel is reduced greatly if nitriding is performed at 420-450 °C for a long time. Therefore, nitriding is performed by appropriately adding a carbide-forming element such as Cr, Mo and V in order to prevent the decrease of strength.

Although the addition of the carbide-forming element such as Cr, Mo and V in large quantities can prevent the decrease of strength during nitriding, breakage may occur during the production of a wire rod due to the formation of a low-temperature structure, and production is almost impossible since the constant-temperature transformation (LP; lead patenting) time for obtaining a pearlite structure is increased greatly. Meanwhile, spring manufacturers want to reduce process time by carrying out nitriding at the highest temperature possible to shorten the nitriding time and, at the same time, require a high-strength wire rod with no problem in terms of on-site productivity.

Accordingly, development of high-strength wire rod and steel wire with ensured fatigue limit and nitriding property and, at the same time, superior productivity is needed.

### [Disclosure]

### [Technical Problem]

In an aspect, the present disclosure is directed to providing a wire rod and a steel wire for a spring, a high-strength spring with improved fatigue resistance and nitriding property, and methods for manufacturing same.

### [Technical Solution]

A wire rod for a spring with improved fatigue resistance and nitriding property according to an embodiment of the present disclosure, contains, by wt%, 0.6-0.7% of C, 2.0-2.5% of Si, 0.2-0.5% of Mn, 0.9-1.6% of Cr, 0.015% of less of P, 0.01 % of less of S, 0.01% of less of Al, 0.007% of less of N, 0.1-0.25% of Mo, 0.1-0.25% of V, Fe and inevitable impurities as the balance, wherein Cr + Mn is 1.8% or less, Mo/V is 1.5 or less, and the microstructure comprises 60% or more of a pearlite structure in the C section.

In an embodiment of the present disclosure, the wire rod may have a prior austenite average grain size of 25 µm or less.

In an embodiment of the present disclosure, the wire rod may have less than 0.2 VN precipitate with an average grain diameter of 10 µm or larger at 1 mm of surface depth per 10 mm of length upon 100-mm L section analysis.

In an embodiment of the present disclosure, the wire rod may include 10 or more (V, Mo)C carbide per 10 × 10 µm², which has a Mo + V content of 10 at.% or more in the carbide and an average grain diameter of 50 nm or less.

In an embodiment of the present disclosure, the wire rod may have a tensile strength of 1,400 MPa or lower and a percent reduction in area of 40% or higher.

A method for manufacturing a wire rod for a spring with improved fatigue resistance and nitriding property according to an embodiment of the present disclosure includes: heating a bloom containing, by wt%, 0.6-0.7% of C, 2.0-2.5% of Si, 0.2-0.5% of Mn, 0.9-1.6% of Cr, 0.015% of less of P, 0.01% of less of S, 0.01% of less of Al, 0.007% of less of N, 0.1-0.25% of Mo, 0.1-0.25% of V, Fe and inevitable impurities as the balance, wherein Cr + Mn is 1.8% or less and Mo/V is 1.5 or less, at 1,200 °C or higher and then rolling the same into a billet; maintaining the billet at 1,050 °C or higher for 180 minutes; obtaining a wire rod by rolling the billet at 1,000 °C or lower; winding the rolled wire rod at 900 °C or lower; and cooling the wound wire rod at a cooling rate of 2 °C/sec or lower.

A method for manufacturing a steel wire for a spring with improved fatigue resistance and nitriding property according to an embodiment of the present disclosure includes: heating a wire rod for a spring and then quenching at 650-750 °C for constant-temperature transformation; and preparing a steel wire by drawing the wire rod.

In an embodiment of the present disclosure, the method may further include, before the constant-temperature transformation step: a step of heating the wire rod at 650-750 °C; and a step of pickling the heated wire rod.

In an embodiment of the present disclosure, the constant-temperature transformation may be performed within 150 seconds.

In an embodiment of the present disclosure, the method may further include QT-heat-treating the steel wire.

A steel wire for a spring with improved fatigue resistance and nitriding property according to an embodiment of the present disclosure contains, by wt%, 0.6-0.7% of C, 2.0-2.5% of Si, 0.2-0.5% of Mn, 0.9-1.6% of Cr, 0.015% of less of P, 0.01% of less of S, 0.01% of less of Al, 0.007% of less of N, 0.1-0.25% of Mo, 0.1-0.25% of V, Fe and inevitable impurities as the balance, wherein Cr + Mn is 1.8% or less, Mo/V is 1.5 or less, and the microstructure includes 90% or more of tempered martensite.

In an embodiment of the present disclosure, the steel wire may have a prior austenite average grain size of 25 µm or less.

In an embodiment of the present disclosure, the steel wire may have less than 0.2 VN precipitate with an average grain diameter of 10 µm or larger at 1 mm of surface depth per 10 mm of length upon 100-mm L section analysis.

In an embodiment of the present disclosure, the steel wire may have a tensile strength of 2,100 MPa or higher and a percent reduction in area of 40% or higher.

In an embodiment of the present disclosure, the steel wire may include 10 or more (V, Mo)C carbide per 10 × 10 µm², which has a Mo + V content of 10 at.% or more in the carbide and an average grain diameter of 50 nm or less.

A method for manufacturing a spring with improved fatigue resistance and nitriding property according to an embodiment of the present disclosure includes: a step of cold-forming a steel wire for a spring into a spring shape; a step of stress-relief heat-treating the formed spring; and a step of performing nitriding at 420-450 °C for 10 hours or longer.

A spring with improved fatigue resistance and nitriding property according to an embodiment of the present disclosure contains, by wt%, 0.6-0.7% of C, 2.0-2.5% of Si, 0.2-0.5% of Mn, 0.9-1.6% of Cr, 0.015% of less of P, 0.01% of less of S, 0.01% of less of Al, 0.007% of less of N, 0.1-0.25% of Mo, 0.1-0.25% of V, Fe and inevitable impurities as the balance, wherein Cr + Mn is 1.8% or less and Mo/V is 1.5 or less, and has a surface hardness of 800 Hv or higher and a hardness of 600 Hv or higher in a region from 1/4 to 3/4 of the wire diameter in the C section.

### [Advantageous Effects]

According to an aspect of the present disclosure, a wire rod, a steel wire and a spring with improved fatigue resistance and nitriding property, and methods for manufacturing same may be provided by preventing the formation of a low-temperature structure as much as possible, limiting grain size, preventing nitride formation and uniformly distributing (Mo, V)C carbide.

### [Best Mode]

A wire rod for a spring with improved fatigue resistance and nitriding property according to an embodiment of the present disclosure contains, by wt%, 0.6-0.7% of C, 2.0-2.5% of Si, 0.2-0.5% of Mn, 0.9-1.6% of Cr, 0.015% of less of P, 0.01% of less of S, 0.01% of less of Al, 0.007% of less of N, 0.1-0.25% of Mo, 0.1-0.25% of V, Fe and inevitable impurities as the balance, wherein Cr + Mn is 1.8% or less, Mo/V is 1.5 or less, and the microstructure comprises 60% or more of a pearlite structure in the C section.

### [Modes for Invention]

The present specification does not describe all the elements of the embodiments, and the description of general contents in the technical field to which the present disclosure belongs is omitted.

When a prat is described to "include" a certain component, it means that other components may be further included unless the context explicitly states otherwise.

Singular expressions include plural expressions unless the context clearly indicates otherwise.

Hereinafter, the present disclosure is described in detail.

The following embodiments are presented to sufficiently convey the technical idea of the present disclosure to those having ordinary knowledge in the technical field to which the present disclosure belongs. The present disclosure is not limited to the embodiments presented herein but may be embodied in other forms.

The inventors of the present disclosure have found out that productivity in steel wire manufacturing can be improved and the nitriding property of a spring can be ensured by suppressing grain size during the manufacturing of a wire rod, preventing nitride formation, uniformly distributing fine carbide as much as possible, and minimizing the formation of a low-temperature structure during the cooling of the wire rod, and have completed the present disclosure.

A wire rod for a spring with improved fatigue resistance and nitriding property according to an embodiment of the present disclosure contains, by wt%, 0.6-0.7% of C, 2.0-2.5% of Si, 0.2-0.5% of Mn, 0.9-1.6% of Cr, 0.015% of less of P, 0.01% of less of S, 0.01% of less of Al, 0.007% of less of N, 0.1-0.25% of Mo%, 0.1-0.25% of V, Fe and inevitable impurities as the balance.

The reason why the alloy composition is limited will be described in detail. The composition means wt% unless specified otherwise.

The content of C is 0.6-0.7%.

C is an element added to ensure the strength of a product. If the content of C is less than 0.6%, it is difficult to ensure the target strength. And, if the C content exceeds 0.7%, impact property after QT heat treatment is decreased greatly and the risk of low-temperature structure formation during the production of a wire rod is increased greatly, leading to poor quality of the wire rod. In addition, productivity may decrease since the LP heat treatment during the manufacturing of the steel wire is increased greatly. Therefore, in the present disclosure, the C content is limited to 0.6-0.7%.

The content of Si is 2.0-2.5%.

Si an element that is used not only for deoxidization of steel but also for ensuring strength through solid solution strengthening. It is essential for nitriding because it suppresses the decrease of the strength of a steel wire during nitriding. In the present disclosure, Si is added in an amount of 2.0% or more because it significantly improves deformation strength, which is an important property for a spring. But, if the Si content exceeds 2.5%, surface decarburization may be induced and the processability may be unsatisfactory. Therefore, in the present disclosure, its content is limited to 2.0-2.5% depending on the target strength and degree of processing.

The content of Mn is 0.2-0.5%.

Mn is an element which improves hardenability. It is one of the elements necessarily added to form a high-strength tempered martensite structure. It is also necessary to fix the impurity S as MnS and make it harmless. If the Mn content is less than 0.2%, the desired effect cannot be achieved sufficiently. And, if the Mn content exceeds 0.5%, quality may be deteriorated due to segregation. In addition, it is not necessary to add 0.5% or more of Mn because sufficient hardenability can be ensured. Therefore, in the present disclosure, the Mn content is limited to 0.2-0.5%.

The content of Cr is 0.9-1.6%.

Cr is an essential element for steel for nitriding since it is effective for improving hardenability together with Mn and greatly improves tempering resistance during nitriding. If the Cr content is less than 0.9%, the desired effect cannot be achieved enough. And, if the Cr content exceeds 1.6%, the toughness of a steel wire decreases greatly. Therefore, in the present disclosure, the Cr content is limited to 0.9-1.6%.

Cr + Mn is 1.8% or less.

If the Cr + Mn content exceeds 1.8%, a low-temperature structure such as bainite or martensite may be formed during the cooling of a wire rod, and long time may be required for pearlite transformation during LP heat treatment. In the present disclosure, Cr + Mn is controlled to 1.8% or less, so that the formation of a low-temperature structure such as bainite or martensite can be maintained at 40% or lower in the C section (the cross-section perpendicular to the rolling direction) during the cooling of the wire rod and pearlite transformation can be completed within 150 seconds during the LP heat treatment.

The content of P is 0.015% or less.

P is an element which is segregated in the grain boundary and lowers toughness and hydrogen-delayed fracture resistance. Because it is preferred to be excluded in steel materials, its upper limit is set to 0.015%.

The content of S is 0.01% or less.

Like P, S is segregated in the grain boundary and lowers toughness and hydrogen-delayed fracture resistance by forming MnS. Therefore, addition amount is limited to 0.01% or lower.

The content of Al is 0.01% or less.

Al is a powerful deoxidizing element which improves cleanliness by removing oxygen in steel. But, since Al can lower fatigue resistance by forming Al₂O₃ inclusions, the Al content is limited to 0.01% or lower in the present disclosure.

The content of N is 0.007% or lower.

Although N is an impurity, it forms undissolved coarse AlN or VN precipitate during heat treatment by binding with Al or V. Therefore, in the present disclosure, the N content is limited to 0.007% or lower.

The content of Mo is 0.1-0.25%.

Mo is an essential element added to improve the tempering resistance of a material for nitriding. Since Mo increases the strength of steel during tempering by forming carbide together with V and maintains the strength even during heat treatment for a long time, it is added in an amount of 0.1% or more. But, if the addition amount of Mo exceeds 0.25%, the quality of a wire rod may be unsatisfactory due to the formation of low-temperature structure after rolling because of prevented pearlite formation, and productivity may be decreased greatly because pearlite transformation is suppressed during LP heat treatment before drawing. Therefore, in the present disclosure, the Mo content is limited to 0.25% or lower.

The content of V is 0.1-0.25%.

Together with Mo, V is an essential element added to improve the tempering resistance of a material for nitriding. In addition, V increases the strength of steel during tempering by forming carbide and maintains the strength even during nitriding for a long time. In addition, V can suppress the formation of a low-temperature structure during the production of a wire rod since it accelerates the transformation of pearlite, and it can improve the productivity of steel wire manufacturing by reducing the constant-temperature transformation time during LP heat treatment. But, since V can cause the formation of coarse nitride during the wire rod production and the temperature of a heating furnace for wire rod rolling should be increased if the addition amount is increased, the upper limit of the V content is limited to 0.25%.

The ratio of Mo/V is 1.5 or less.

As described above, Mo is an essential element for improving the tempering resistance of a material for nitriding. However, since Mo suppresses the formation of a pearlite structure, it is added together with V, which reduces pearlite transformation time, and the ratio of Mo/V is limited to 1.5 or less. By limiting the Mo/V ratio to 1.5 or less, the formation of a low-temperature structure during cooling of a wire rod can be suppressed and the pearlite transformation time during LP heat treatment can be reduced.

The remaining component of the alloy composition is Fe. But, the wire rod for a spring with improved fatigue resistance and nitriding property of the present disclosure may include other impurities that can be included in common steel production processes. These impurities are well known to those having ordinary knowledge in the art to which the present disclosure belongs, and their types and contents are not specially limited in the present disclosure.

The wire rod for a spring with improved fatigue resistance and nitriding property according to the present disclosure may have a microstructure with a prior austenite average grain size of 25 µm or less.

The wire rod for a spring with improved fatigue resistance and nitriding property according to the present disclosure may include 60% or more of a pearlite structure and a bainite or martensite structure as the remainder in the C section (the cross-section perpendicular to the rolling direction). Specifically, it may include 80% or more of a pearlite structure.

The wire rod for a spring with improved fatigue resistance and nitriding property according to the present disclosure may have less than 0.2 VN precipitate with an average grain diameter of 10 µm or larger at 1 mm of surface depth per 10 mm of length and containing 10 at% or more of V upon 100-mm L section (the cross-section parallel to the rolling direction) analysis.

The wire rod for a spring with improved fatigue resistance and nitriding property according to the present disclosure may include 10 or more (V, Mo)C precipitate per 10 × 10 µm², which has a Mo + V content of 10 at.% or more and an average grain diameter of 50 nm or less.

The wire rod for a spring with improved fatigue resistance and nitriding property according to the present disclosure may have a tensile strength of 1,400 MPa or lower.

Next, a method for manufacturing the wire rod for a spring with improved fatigue resistance and nitriding property according to an embodiment of the present disclosure will be described.

The wire rod for a spring with improved fatigue resistance and nitriding property according to the present disclosure may be manufactured by various methods without particular limitation. As an embodiment, it may be manufactured by the following method.

The wire rod for a spring with improved fatigue resistance and nitriding property according to the present disclosure may be manufactured by a method including: a step of heating a bloom containing, by wt%, 0.6-0.7% of C, 2.0-2.5% of Si, 0.2-0.5% of Mn, 0.9-1.6% of Cr, 0.015% of less of P, 0.01% of less of S, 0.01% of less of Al, 0.007% of less of N, 0.1-0.25% of Mo, 0.1-0.25% of V, Fe and inevitable impurities as the balance, wherein Cr + Mn is 1.8% or less and Mo/V is 1.5 or less, at 1,200 °C or higher and then rolling the same into a billet; a step of maintaining the billet at 1,050 °C or higher for 180 minutes; a step of obtaining a wire rod by rolling the billet at 1,000 °C or lower; a step of winding the rolled wire rod at 900 °C or lower; and a step of cooling the wound wire rod at a cooling rate of 2 °C/sec or lower.

Hereinafter, each step will be described in detail.

First, a bloom satisfying the above-described composition is heated at 1,200 °C or higher and a billet is obtained by rolling the bloom.

The heating is performed to remove all nitride in the steel. If the temperature is below 1,200 °C, nitride cannot be removed sufficiently. Therefore, the lower limit of the heating temperature is limited to 1,200 °C.

Then, the rolled billet is maintained at 1,050 °C or higher for 180 minutes. If the temperature is below 1,050 °C or the time is shorter than 180 minutes, carbide cannot be obtained enough because V is not dissolved sufficiently and, thus, the tempering resistance of the final product may be inferior. Therefore, in the present disclosure, the billet may be maintained at 1,050 °C or higher for 180 minutes.

The billet is extracted at 1,030-1,060 °C and then rolled at 1,000 °C or lower into a wire rod. If the rolling temperature is 1,000 °C or higher, the prior austenite grain size may be increased and surface decarburization may be induced by Si during the cooling of the wire rod. In addition, since the winding temperature in the following process is limited to 900 °C or lower, the rolling temperature is limited to 1,000 °C or lower if possible.

The rolled wire rod is wound at 900 °C or lower and a wire rod according to the present disclosure is obtained by cooling slowly at a cooling rate of 0.5-2 °C/sec. If the cooling rate is lower than 0.5 °C/sec, decarburization may occur. And, if the cooling rate exceeds 2 °C/sec, fracture may occur due to the formation of a low-temperature structure. Therefore, in the present disclosure, the cooling rate after the winding is limited to 0.5-2 °C/sec.

The wire rod for a spring manufactured according to the present disclosure may include 60% or more of a pearlite structure and a bainite or martensite structure as the remainder in the C section (the cross-section perpendicular to the rolling direction). Specifically, it may include 80% or more of a pearlite structure.

In addition, the wire rod for a spring according to the present disclosure has a prior austenite average grain size of 25 µm or less. In addition, it has less than 0.2 VN precipitate with an average grain diameter of 10 µm or larger at 1 mm of surface depth per 10 mm of length and containing 10 at% or more of V upon 100-mm L section (the cross-section parallel to the rolling direction) analysis, and includes 10 or more (V, Mo)C precipitate per 10 × 10 µm², which has a Mo + V content of 10 at.% or more and an average grain diameter of 50 nm or less.

That is to say, the wire rod for a spring according to the present disclosure may ensure superior nitriding property during the manufacturing of a spring since the prior austenite grain size is controlled, the formation of VN nitride is suppressed, and (V, Mo)C carbide is distributed uniformly.

In addition, the wire rod for a spring according to the present disclosure may have a tensile strength of 1,400 MPa or lower and a percent reduction in area of 40% or higher.

Then, a method for manufacturing a steel wire for a spring using the wire rod for a spring according to the present disclosure will be described. The steel wire for a spring according to the present disclosure is manufactured by drawing the wire rod prepared above.

The method for manufacturing a high-strength steel wire for a spring according to an embodiment of the present disclosure includes: a step of LA heat-treating the wire rod according to the present disclosure; a step of conducting LP heat treatment; and a step of preparing a steel wire by drawing the wire rod.

First, the wire rod manufactured according to the present disclosure is subjected to low-temperature annealing (LA) treatment at 650-750 °C. Through the LA heat treatment, the strength of the wire rod is decreased to 1,200 MPa or lower. If necessary, the LA heat treatment may be omitted in the present disclosure.

Subsequently, the LA heat-treated wire rod is pickled, heated at 900-1050 °C for 10 minutes, and then maintained at the temperature for 5 minutes or shorter. The reheating at 900-1050 °C is for obtaining an austenite structure and is conducted for 15 minutes or shorter. Since a coarse austenite structure may be obtained if the heat treatment exceeds 15 minutes, the heat treatment is limited within 15 minutes. Then, the heated wire rod is quenched by passing through a lead bath at 650-750 °C (LP; lead patenting) for 3 minutes or shorter for constant-temperature transformation to obtain a pearlite structure. If the temperature of the lead bath is below 650 °C, a low-temperature structure may be formed. And, if it exceeds 750 °C, the density of the pearlite structure may decrease. Therefore, the lead bath temperature is limited to 650-750 °C. In addition, in the present disclosure, the Mo/V ratio is controlled to 1.5 or less and Mn + Cr is controlled to 1.8% or less in order to reduce the pearlite transformation time within 150 seconds and ensure productivity during the LP heat treatment.

Then, a steel wire is prepared by drawing the LP heat-treated wire rod. The prepared steel wire may have a wire diameter of 5 mm. If the LP heat treatment is performed again, the wire diameter may be 2 mm or less.

In addition, the steel wire manufactured according to the present disclosure may have a pearlite structure.

The pearlite steel wire according to the present disclosure may be transformed to a tempered martensite structure through a QT process in order to ensure the ultrahigh strength of 2,100 MPa or higher and toughness desired by the present disclosure.

In order to ensure a tempered martensite structure, the pearlite steel wire prepared according to the present disclosure is first heated at 900-1,000 °C for 5 minutes or shorter and maintained at the temperature for 10 minutes or shorter. Then, the heated steel wire is quenched in an oil at 70 °C or lower and maintained at the temperature for 2 minutes or shorter to obtain a steel wire with a martensite structure.

Then, the quenched steel wire with a martensite structure is re-heated at 450-500 °C for 3 minutes or shorter and maintained at the temperature for 5 minutes or shorter. The re-heated steel wire is quenched in an oil at 70 °C or lower to obtain a high-strength steel wire for a spring with a tempered martensite structure.

The quenching temperature is 450-550 °C. If the quenching temperature is lower than 450 °C, sufficient toughness cannot be ensured because of too high strength. And, if it exceeds 550 °C, the strength desired by the present disclosure cannot be ensured. Therefore, the quenching temperature is limited to 450-500 °C.

The high-strength steel wire for a spring manufactured according to the present disclosure may have a microstructure including 90% or more of a tempered martensite.

The high-strength steel wire for a spring according to the present disclosure has a prior austenite average grain size of 25 µm or less and does not have VN precipitate with an average grain diameter of 10 µm or larger at 1 mm of surface depth per 10 mm of length upon 100-mm L section (the cross-section parallel to the rolling direction) analysis. In addition, the high-strength steel wire for a spring according to the present disclosure includes 10 or more (V, Mo)C precipitate per 10 × 10 µm², which has a Mo + V content of 10 at.% or more and an average grain diameter of 50 nm or less.

The steel wire for a spring according to the present disclosure ensures superior nitriding property during the manufacturing of a spring since the prior austenite grain size is controlled, the formation of VN nitride is suppressed, and (V, Mo)C carbide is distributed uniformly.

In addition, the high-strength steel wire for a spring according to the present disclosure may have a tensile strength of 2,100 MPa or higher and a percent reduction in area (RA) of 40% or higher.

Next, a method for manufacturing a spring for a transmission using the high-strength steel wire for a spring according to the present disclosure will be described. The spring for a transmission according to the present disclosure may be manufactured by a common method. For example, it may be prepared by the following method.

After cold-forming the high-strength steel wire for a spring according to the present disclosure into a spring, followed by stress-relief heat treatment and nitriding, a spring for a transmission may be manufactured finally through shot peening.

The nitriding may be performed at 420-450 °C for 10 hours or longer. If the nitriding temperature is below 420 °C, nitrogen cannot penetrate properly into the surface. And, if the nitriding temperature exceeds 450 °C, the desired strength of the spring cannot be ensured because the hardness at the core part is decreased. Therefore, in the present disclosure, the nitriding temperature is limited to 420-450 °C and the nitriding time is limited to 10 hours or longer.

The spring for a transmission according to the present disclosure can ensure superior nitriding property during the manufacturing of a spring by controlling the prior austenite grain size of the steel wire for a spring, suppressing the formation of VN nitride and uniformly distributing (V, Mo)C carbide.

After the nitriding, the fatigue limit of the spring may be improved by 10% or more as compared to before the nitriding. Here, the fatigue limit refers to the limit that can endure 107 or more repeated loading cycles in the fatigue test.

In addition, after the nitriding, the decrease of the strength of the spring may be reduced to 10% or less as compared to before the nitriding.

In addition, the spring may have a surface hardness of 800 Hv or higher after the nitriding and may have a hardness of 600 Hv or higher in a region from 1/4 to 3/4 of the wire diameter in the C section (the cross-section perpendicular to the rolling direction).

Since the nitriding can be performed at a high temperature of 420-450 °C, the nitriding time can be reduced and superior nitriding property can be achieved.

Hereinafter, the present disclosure is described in more detail through examples. However, the examples are described only to illustrate the present disclosure and the present disclosure is not limited by the examples. The scope of the present disclosure is determined by the appended claims and the matters reasonably inferred therefrom.

### Examples

After casting a material having the alloy composition described in Table 1 into an ingot, followed by homogenization heat treatment at 1,200 °C, wire rod samples of the examples and comparative examples were obtained by conducting hot rolling to a final wire diameter of 6.5 mm while lowering temperature from 1,050 °C to 830 °C and then cooling at a rate of 1 °C/sec. Then, tensile strength, percent reduction in area (RA), pearlite fraction, average prior austenite size, number of precipitate with a size of 50 nm or less upon transmission electron microscopic (TEM) analysis and number of VN nitride with a size of 10 µm or larger at 1 mm of surface depth per 10 mm of length upon 100-mm L section analysis by scanning electron microscopy (SEM) were measured for the wire rods of the examples and comparative examples. The result is shown in Table 2.

**[Table 1]**

| | Alloying elements (wt%) | | | | | | | | | |
|---|---|---|---|---|---|---|---|---|---|---|
| | C | Si | Mn | Cr | P | S | Mo | V | Al | N |
| Example 1 | 0.63 | 2.2 | 0.3 | 1.2 | 0.009 | 0.005 | 0.2 | 0.15 | < 0.003 | < 0.005 |
| Example 2 | 0.63 | 2.2 | 0.3 | 1.2 | 0.011 | 0.005 | 0.17 | 0.2 | < 0.003 | < 0.005 |
| Comparative Example 1 | 0.63 | 2.2 | 0.4 | 1.2 | 0.009 | 0.004 | 0.24 | 0.11 | < 0.003 | < 0.005 |
| Comparative Example 2 | 0.63 | 2.1 | 0.4 | 1.2 | 0.008 | 0.005 | 0.16 | 0.3 | < 0.003 | < 0.005 |
| Comparative Example 3 | 0.62 | 2.1 | 0.3 | 1.2 | 0.01 | 0.004 | 0.3 | 0.2 | < 0.003 | < 0.005 |
| Comparative Example 4 | 0.64 | 2.2 | 0.4 | 1.5 | 0.01 | 0.005 | 0.19 | 0.14 | < 0.003 | < 0.005 |
| Comparative Example 5 | 0.62 | 2.2 | 0.3 | 1.1 | 0.008 | 0.005 | 0.12 | 0.03 | < 0.003 | < 0.005 |

**[Table 2]**

| | Tensile strength (MPa) | Reduction in area (RA, %) | Pearlite fraction (%) | Average prior austenite size (µm) | Number of (V, Mo)C precipitate (/10 x 10 µm²) | Number of VN (per 10 mm) |
|---|---|---|---|---|---|---|
| Example 1 | 1212 | 41 | 92 | 20 | 13 | 0 |
| Example 2 | 1156 | 42 | 91 | 22 | 15 | 0 |
| Comparative Example 1 | 1455 | 11 | 42 | 21 | 13 | 0 |
| Comparative Example 2 | 1253 | 35 | 88 | 19 | 48 | 0.2 |
| Comparative Example 3 | 1642 | 3 | 0 | 22 | 22 | 0 |
| Comparative Example 4 | 1532 | 3 | 0 | 23 | 15 | 0 |
| Comparative Example 5 | 1241 | 41 | 95 | 21 | 4 | 0 |

Then, the 6.5-mm wire rod samples of the comparative examples and examples were heat-treated at 720 °C for 2 hours (LA heat treatment), pickled, heat-treated at 980 °C for 3 minutes, and then subjected to LP heat treatment at 680 °C. The time of transformation to pearlite by the LP heat treatment was measured and the result is given in Table 3 together with Mo/V ratio and Cr + Mn.

**[Table 3]**

| | Mo/V ratio | Mn + Cr (wt%) | Pearlite transformation time by LP heat treatment (sec) |
|---|---|---|---|
| Example 1 | 1.33 | 1.5 | 110 |
| Example 2 | 0.85 | 1.5 | 97 |
| Comparative Example 1 | 2.18 | 1.6 | 171 |
| Comparative Example 2 | 0.53 | 1.6 | 101 |
| Comparative Example 3 | 1.50 | 1.5 | 180 |
| Comparative Example 4 | 1.36 | 1.9 | 191 |
| Comparative Example 5 | 4.00 | 1.4 | 88 |

Then, the pearlite wire rod sample was prepared into a steel wire with a wire diameter of 3 mm through drawing. The prepared steel wire was heat-treated at 950 °C for minutes, quenched in an oil at 60 °C, and then tempered at 450-500 °C within 3 minutes to obtain a QT steel wire sample. The result of measuring the tensile strength and RA of the QT steel wire sample is shown in Table 4. Then, the QT steel wire sample was prepared into a spring according to the method of the present disclosure and fatigue strength was measured by conducting fatigue test under the condition of R (tensile stress/compressive stress) = -1. Subsequently, after nitriding the QT steel wire at 450 °C, hardness was measured at 10 or more points in a region from 1/4 to 3/4 of the wire diameter in the C section and then averaged. The fatigue strength was also measured before the nitriding under the same condition. The result is shown in Table 4.

**[Table 4]**

| | Tensile strength of QT steel wire (MPa) | RA of QT steel wire (%) | Fatigue strength (MPa) | Average hardness from 1/4 to 3/4 after nitriding (Hv) | Fatigue strength after nitriding (MPa) |
|---|---|---|---|---|---|
| Example 1 | 2242 | 44 | 812 | 612 | 901 |
| Example 2 | 2232 | 45 | 808 | 605 | 898 |
| Comparative Example 1 | 2232 | 42 | 811 | 603 | 878 |
| Comparative Example 2 | 2322 | 38 | 712 | 622 | 902 |
| Comparative Example 3 | 2352 | 35 | 802 | 612 | 903 |
| Comparative Example 4 | 2251 | 44 | 803 | 605 | 898 |
| Comparative Example 5 | 2152 | 46 | 793 | 580 | 791 |

Referring to Tables 2-4, for Examples 1 and 2, which satisfy the alloy composition and manufacturing condition of the present disclosure, the tensile strength of the wire rod was 1,400 MPa or lower, the pearlite fraction was 60% or higher, there were 10 or more (Mo, V)C precipitate per 10 × 10 µm², the strength of the steel wire after QT heat treatment was 2,100 MPa or higher, RA was 40% or higher, and the fatigue strength after nitriding was increased by 10% or more. In contrast, for Comparative Example 1, wherein the Mo content was excessively high as compared to V, the pearlite fraction was 42%, suggesting that pearlite was not formed enough during cooling, the pearlite transformation time exceeded 150 seconds, and the tensile strength was 1,400 MPa or higher. For Comparative Example 2, wherein V was added at an excessive content of 0.3%, the RA of the OT steel wire was low as 38% due to crystallization of coarse VN on the surface, and the fatigue strength was very inferior as 712 MPa as compared to other samples.

For Comparative Example 3, wherein Mo was added excessively, the tensile strength of the wire rod was higher than 1,400 MPa and RA was inferior as 35% due to formation of a low-temperature structure throughout the C section. In addition, productivity was not ensured because the pearlite transformation time exceeded 150 seconds.

For Comparative Example 4, wherein the Mo/V ratio was satisfied but Mn + Cr exceeded 1.8%, the tensile strength of the wire rod was higher than 1,400 MPa and productivity was not ensured because the pearlite transformation time exceeded 150 seconds due to formation of a low-temperature structure, as in Comparative Example 3.

For Comparative Example 5, wherein the V content was low, the fatigue strength of the OT steel wire was inferior as 793 MPa, the fatigue strength was decreased after the nitriding, and the fatigue property was not improved.

The present disclosure is not limited by the above-described embodiments and those having ordinary knowledge in the art will understand that various changes and modifications can be made without departing from the concept and scope of the appended claims.

### [Industrial Applicability]

According to an embodiment of the present disclosure, a wire rod and a steel wire for a spring, a spring with improved fatigue resistance and nitriding property, and methods for manufacturing same may be provided.

## Claims

1. A wire rod for a spring with improved fatigue resistance and nitriding property comprising, by wt%, 0.6-0.7% of C, 2.0-2.5% of Si, 0.2-0.5% of Mn, 0.9-1.6% of Cr, 0.015% of less of P, 0.01% of less of S, 0.01% of less of Al, 0.007% of less of N, 0.1-0.25% of Mo, 0.1-0.25% of V, Fe and inevitable impurities as the balance, wherein:
Cr + Mn is 1.8% or less,
a ratio of Mo/V is 1.5 or less, and
a microstructure comprises 60% or more of a pearlite in the C section.

2. The wire rod of claim 1, wherein an average grain size of prior austenite is 25 µm or less.

3. The wire rod of claim 1, wherein a VN precipitate is less than 0.2 with an average grain diameter of 10 µm or more at 1 mm of surface depth per 10 mm of length upon 100-mm L section analysis.

4. The wire rod of claim 1, wherein the wire rod includes 10 or more (V, Mo)C carbide per 10 × 10 µm²,
wherein the (V,Mo)C carbide has a Mo + V content of 10 at.% or more, and an average grain diameter is 50nm or less.

5. The wire of claim 1, wherein a tensile strength is 1,400 MPa or less and a reduction in area is 40% or more.

6. A method for manufacturing a wire rod for a spring with improved fatigue resistance and nitriding property, comprising:
heating a bloom comprising, by wt%, 0.6-0.7% of C, 2.0-2.5% of Si, 0.2-0.5% of Mn, 0.9-1.6% of Cr, 0.015% of less of P, 0.01% of less of S, 0.01% of less of Al, 0.007% of less of N, 0.1-0.25% of Mo, 0.1-0.25% of V, Fe and inevitable impurities as the balance, wherein Cr + Mn is 1.8% or less and Mo/V is 1.5 or less, at 1,200 °C or more and then rolling the same into a billet;
maintaining the billet at 1,050 °C or higher for 180 minutes;
obtaining a wire rod by rolling the billet at 1,000 °C or lower;
winding the rolled wire rod at 900 °C or lower; and
cooling the wound wire rod at a cooling rate of 2 °C/sec or lower;.

7. A method for manufacturing a steel wire for a spring with improved fatigue resistance and nitriding property, comprising:
heating the wire rod for a spring according to any of claims 1 to 5 at 900-1050 °C and then quenching at 650-750 °C for constant-temperature transformation; and
preparing a steel wire by drawing the wire rod;.

8. The method of claim 7, which further comprises, before the constant-temperature transformation:
heating the wire rod at 650-750 °C; and
pickling the heated wire rod;.

9. The method of claim 7, wherein the constant-temperature transformation is performed within 150 seconds.

10. The method of claim 7, which further comprises QT-heat-treating the steel wire.

11. A steel wire for a spring with improved fatigue resistance and nitriding property comprising, by wt%, 0.6-0.7% of C, 2.0-2.5% of Si, 0.2-0.5% of Mn, 0.9-1.6% of Cr, 0.015% of less of P, 0.01% of less of S, 0.01% of less of Al, 0.007% of less of N, 0.1-0.25% of Mo, 0.1-0.25% of V, Fe and inevitable impurities as the balance,
wherein Cr + Mn is 1.8% or less, a ratio of Mo/V is 1.5 or less, and
the microstructure comprises 90% or more of tempered martensite.

12. The steel wire of claim 11, wherein an average grain size of prior austenite is 25 µm or less.

13. The steel wire of claim 11, wherein a VN precipitate is less than 0.2 with an average grain diameter of 10 µm or more at 1 mm of surface depth per 10 mm of length upon 100-mm L section analysis.

14. The steel wire of claim 11, wherein a tensile strength is 2,100 MPa or more and a reduction in area is 40% or more.

15. The steel wire of claim 11, wherein the steel wire includes 10 or more (V, Mo)C carbide per 10 × 10 µm²,
wherein the (V,Mo)C carbide has a Mo + V content of 10 at.% or more, and an average grain diameter is 50nm or less.
